# EUROPÄISCHE PATENTANMELDUNG

(11) **EP 3 738 859 A1**
(43) Veröffentlichungstag der Anmeldung: **18.11.2020**
(21) Anmeldenummer: 20155573.7
(22) Anmeldetag: 05.02.2020
(51) Int. Cl.: B62B 3/18, B62B 3/02, B62B 5/04

(54) **ROLLBEHÄLTER, INSBESONDERE ROLLCONTAINER**

(30) Priorität: 14.05.2019 DE 202019102709 U
(71) Anmelder: FEIL GmbH, 33142 Büren (DE)
(72) Erfinder: SCHMIDT, Eckhart, 33100 Paderborn (DE)
(74) Vertreter: Andrejewski - Honke Patent- und Rechtsanwälte Partnerschaft mbB

(57) **Zusammenfassung**

Die Erfindung betrifft einen Rollbehälter, insbesondere Rollcontainer, mit einer auf drehbaren Rollen (1, 2) gelagerten Basis (3), und mit einem auf der Basis (3) angeordneten Gitterwandgestell (4, 5) aus zumindest zwei sich gegenüberliegenden Seitenwänden (4). Die Basis (3) weist unterseitig wenigstens eine hieran drehbar gelagerte Strebe (12) auf, welche gegenüber beidseitigen Lageröffnungen (13) sowohl in eine arretierte Transportstellung als auch in eine frei schwenkbare Lagerstellung überführbar ist.

## Beschreibung

Die Erfindung betrifft einen Rollbehälter, insbesondere Rollcontainer, mit einer auf drehbaren Rollen gelagerten Basis, und mit einem auf der Basis angeordneten Gitterwandgestell aus zumindest zwei sich gegenüberliegenden Seitenwänden.

Rollbehälter und insbesondere zusammenfahrbare Rollbehälter sind seit langem bekannt, wozu nur beispielhaft auf die DE 1 994 644 der Anmelderin hingewiesen sei. Hier geht es um einen zusammenfahrbaren Rollbehälter mit einer hochklappbaren Ladeplatte. Die Ladeplatte ist an einem Seitenteil angelenkt und über einen oder mehrere Gelenkhebel mit dem gegenüberliegenden Seitenteil verbunden. Beim Hochschwenken der Ladeplatte werden die Seitenteile parallel zueinander zusammengefahren.

Rollbehälter und insbesondere Rollcontainer bezeichnen rollbare Transportgestelle, die zur Aufnahme, Lagerung und zum Transport von Gegenständen eingesetzt werden. Typische Anwendungsfälle sind in der Lebensmittelindustrie und Logistikbranche zu finden. Zu diesem Zweck verfügen die Rollbehälter bzw. Rollcontainer typischerweise über einen Boden und die wenigstens zwei Seitenwände. Zur Reduzierung des Gewichtes handelt es sich bei den Seitenwänden meistens um Gitterwände und diese definieren insgesamt das zuvor bereits beschriebene Gitterwandgestell.

Mit Hilfe der an der Basis vorgesehenen drehbaren Rollen kann der Rollbehälter leicht verfahren werden. Dazu mögen insgesamt vier Rollen vorgesehen werden. Beispielsweise können zwei Rollen als feststehende Bockrollen und zwei weitere Rollen als Lenkrollen ausgebildet sein. Es ist aber auch möglich, auf insgesamt vier Lenkrollen zurückzugreifen.

Der Boden und die Seitenwände sind im Allgemeinen aus Metall bzw. einem Metallgeflecht hergestellt, um eine einfache Reinigung zu ermöglichen und zugleich das Gewicht niedrig zu halten. Das ist insbesondere für Anwendungen in der Lebensmittel- und Logistikbranche von Bedeutung. Außerdem verfügen solche Metallgeflechte bzw. Gitterwandgestelle über eine hohe Stabilität, sodass die beschriebenen Rollcontainer für die beschriebenen Anwendungszwecke prädestiniert sind.

Da leere Rollcontainer einen hohen Platzbedarf aufweisen, werden heutzutage oftmals Lösungen verfolgt, bei denen die Rollbehälter insgesamt in eine sogenannte Nestlage überführt werden können. In dieser Nestlage ist der Boden bzw. die zugehörige Bodenplatte oftmals aufrecht hochgeschwenkt. Hierfür kann eine Feder sorgen, wie dies beispielsweise in der DE 10 2014 105 450 U1 beschrieben wird. Hier wird die Nestlage meistens ohne zusätzliche Beaufschlagung des Bodens regelmäßig eingenommen, nämlich durch die Kraft der Feder.

In der beschriebenen Nestlage können mehrere Rollbehälter ineinandergeschoben werden. Zu diesem Zweck ist die Basis oftmals U-förmig mit zwei beidseitigen U-Schenkeln und einer U-Basis ausgerüstet. Die beiden U-Schenkel verlaufen in diesem Zusammenhang regelmäßig schräg zur Basis, sodass insgesamt die U-Schenkel einen sogenannten A-Frame ausbilden. Zu diesem Zweck lassen sich die beiden Seitenwände darüber hinaus meistens um jeweils vertikale Achsen schwenken. Als Folge hiervon können die um die jeweils ihre vertikale Achse schwenkbaren Seitenwände bei hochgeschwenkter Bodenplatte an die schrägen U-Schenkel angelegt werden und lassen sich die einzelnen leeren Rollbehälter ineinanderschieben bzw. nesten. Das wird im Detail beispielhaft in der EP 2 597 011 A1 beschrieben. Ergänzend sei auf die zuvor bereits genannte und gattungsbildende DE 20 2014 105 450 U1 Bezug genommen.

Die Rollbehälter nach dem Stand der Technik werden typischerweise entweder vom Bedienpersonal manuell hin- und hergeschoben oder beispielsweise mit Förderelementen transportiert. Bei diesen Förderelementen kann es sich um Flurförderfahrzeuge, wie beispielsweise Gapelstapler, handeln. Der Transport mit Hilfe der Flurförderfahrzeuge erfolgt dabei bisher in der Weise, dass das betreffende Flurförderfahrzeug mit seinen Gabelzinken unter die beiden U-Schenkel der U-förmigen Basis fährt, also quer zur Längserstreckung der sich gegenüberliegenden beiden Seitenwände.

Neben dieser Möglichkeit des Transportes des bekannten Rollbehälters in seiner Gebrauchslage durch quer zur Längserstreckung der Seitenwände die Basis untergreifende Gabelzinken werden heutzutage zunehmend automatisierte Förderelemente in der Praxis eingesetzt. Außerdem ergibt sich oftmals die zusätzliche Anforderung, den betreffenden Rollbehälter nicht nur quer zur Längserstreckung der Seitenwände unterfahren zu können, sondern auch eine Aufnahme des Rollbehälters in Längsrichtung mit einem entsprechenden Förderelement zuzulassen. Das führt bei den bekannten Rollbehältern in der Praxis oftmals dazu, dass der Boden bzw. die Bodenplatte hochklappen kann und der Rollbehälter insgesamt kippt.

Zwar stehen mit der Lösung nach der DE 20 2018 104 227 U1 bereits vielversprechende Ansatzpunkte zur Verfügung, das genannte Problem zu beherrschen. Denn an dieser Stelle ist eine die U-förmige Basis wahlweise schließende und öffnende Verbindungsstange zwischen den U-Schenkeln vorgesehen, mit deren Hilfe insbesondere der Transport durch Flurförderfahrzeuge in Längsrichtung gewährleistet ist und problemlos zur Verfügung gestellt werden kann. Allerdings besteht an dieser Stelle noch weiterer Verbesserungsbedarf. Das gilt insbesondere für Rollbehälter mit beispielsweise feststehender Bodenplatte. Auch werden in der Praxis zunehmend Lösungen gefordert, bei welchen der typischerweise von einem Bediener zu verrichtende Vorgang des Schließens und Öffnens der Verbindungsstange zwischen den U-Schenkeln entfallen kann bzw. entbehrlich ist. Hier will die Erfindung insgesamt Abhilfe schaffen.

Der Erfindung liegt das technische Problem zugrunde, einen derartigen Rollbehälter so weiterzuentwickeln, dass ein maschineller Transport mit Hilfe von beispielsweise Förderelementen insbesondere in seiner Gebrauchslage sowohl in Quer- als auch Längsrichtung problemlos möglich ist, und zwar unter Verzicht auf zusätzliche manuelle Arbeitsschritte.

Zur Lösung dieser technischen Problemstellung ist ein gattungsgemäßer Rollbehälter und insbesondere Rollcontainer im Rahmen der Erfindung dadurch gekennzeichnet, dass die Basis unterseitig wenigstens eine hieran drehbar gelagerte Strebe aufweist, welche gegenüber beidseitigen Lageröffnungen sowohl in eine arretierte Transportstellung als auch in eine frei schwenkbare Lagerstellung überführbar ist.

Im Rahmen der Erfindung wird also der Rollbehälter unterseitig an der Basis zunächst einmal mit der an der Basis drehbar gelagerten Strebe ausgerüstet. Meistens ist nur eine Strebe erforderlich, beispielsweise für den Fall, dass die Basis U-förmig ausgebildet ist. In diesem Fall findet sich die Strebe gegenüberliegend einer U-Basis und verbindet die beiden Enden der U-Schenkel miteinander. Grundsätzlich können aber auch zwei Streben bzw. Querstreben im Beispielfall realisiert sein, die die in diesem Fall meistens auf zwei Längsstreben reduzierte Basis jeweils an ihren Enden miteinander verbinden.

Im Regelfall wird jedoch mit einer U-förmigen Basis mit zwei U-Schenkeln und einer U-Basis gearbeitet. Gegenüberliegend der U-Basis ist die Strebe drehbar an der Basis gelagert, und zwar dergestalt, dass die Strebe die beiden Enden der U-Schenkel miteinander verbindet. Die beiden U-Schenkel können in diesem Fall schräg an die U-Basis angeschlossen werden, und zwar in der Art des zuvor angesprochenen "A-Frame", um mehrere in Nestlage befindliche Rollcontainer ineinanderschieben zu können, wie dies nachfolgend noch näher erläutert wird. Das gilt selbstverständlich nur beispielhaft und ist keinesfalls einschränkend zu verstehen. Das heißt, im Rahmen der Erfindung werden grundsätzlich auch nicht nestbare Rollbehälter mit überwiegend senkrecht an die U-Basis angeschlossenen U-Schenkeln sowie meistens feststehendem Boden mit umfasst.

Typischerweise ist der erfindungsgemäße Rollbehälter jedoch nestbar ausgelegt und verfügt zu diesem Zweck über die schräg an die U-Basis angeschlossenen U-Schenkel. Die einzelnen Seitenwände mögen dabei jeweils um eine im Wesentlichen vertikale Achse schwenkbar ausgebildet sein. Es kann aber auch mit feststehenden Seitenwänden gearbeitet werden. Die Bodenplatte mag ihrerseits um eine größtenteils horizontale Schwenkachse klappbar ausgelegt sein. In diesem Fall lässt sich die Bodenplatte gegen Federkraft in eine größtenteils horizontale Gebrauchslage oberhalb der Basis sowie durch Federkraft in die größtenteils senkrechte Nestlage schwenkbar verstellen. Grundsätzlich kann aber auch mit einer feststehenden Bodenplatte gearbeitet werden.

So oder so sind sämtliche beschriebenen Varianten dadurch gekennzeichnet, dass zunächst einmal die Basis an ihrer Unterseite die wenigstens eine hieran drehbar gelagerte Strebe aufweist. Die Strebe verbindet dabei typischerweise die jeweiligen Enden der U-Schenkel der U-förmigen Basis. Demzufolge handelt es sich bei der Strebe meistens um eine Querstrebe, welche überwiegend parallel zur gegenüberliegenden U-Basis und quer zur Längserstreckung der Basis und damit des Rollbehälters verläuft.

Die Schwenkbarkeit der fraglichen Strebe ist dabei erfindungsgemäß speziell ausgelegt. Denn die an der Basis drehbar gelagerte Strebe wird in gegenüberliegenden beidseitigen Lageröffnungen aufgenommen, die sich jeweils am Ende der U-Schenkel der U-Basis befinden. Dabei ist die Auslegung insgesamt so getroffen, dass die fragliche Strebe zumindest zwei Funktionsstellungen einnehmen kann.

Zunächst einmal lässt sich die drehbar gelagerte Strebe in die arretierte Transportstellung überführen. In dieser Transportstellung ist die Strebe gegenüber der Basis arretiert, also festgelegt, sodass in der Transportstellung unschwer ein Flurförderfahrzeug oder allgemein ein Förderelement mit beispielsweise Gabelzinken die Basis unterfahren und den Rollbehälter problemlos transportieren kann. Demgegenüber korrespondiert die frei schwenkbare Lagerstellung der Strebe dazu, dass beispielsweise in dieser Lagerstellung ein weiterer Rollbehälter mit seiner U-Basis voran nestend in den fraglichen Rollbehälter einfahren kann. Hierbei wird durch die U-Basis des weiteren Rollbehälters die in der frei schwenkbaren Lagerstellung befindliche Strebe verschwenkt und von der U-Basis insgesamt unterfahren, um die nestende Anordnung der Rollbehälter in der Lagerstellung erreichen zu können.

Nach vorteilhafter Ausgestaltung ist die Strebe als quer zur Längserstreckung orientierte Querstrebe ausgebildet. Die Querstrebe ist dabei im Allgemeinen im Bereich einer Querrandseite der Basis angeordnet, nämlich im zuvor geschilderten Beispielfall parallel zur U-Basis unter gleichzeitiger Verbindung der Enden der zugehörigen U-Schenkel.

Darüber hinaus ist die Strebe meistens vorteilhaft unterhalb einer auf der Basis angeordneten Bodenplatte platziert. Die Bodenplatte lässt sich für die nestende Anordnung mehrerer Rollbehälter typischerweise hochschwenken oder kann mit einer Feder ausgerüstet sein, welche dafür sorgt, dass die Bodenplatte in der Nestlage eine größtenteils aufrechte Position beispielsweise in Anlage an einer der beiden Seitenwände einnimmt.

Im Detail verfügt die Strebe über jeweils kopfseitige Lagerzapfen, die in die sich gegenüberliegenden Lageröffnungen eingreifen. Von besonderer Bedeutung ist in diesem Zusammenhang, dass der jeweilige Lagerzapfen im Querschnitt rechtechtförmig und insbesondere quadratisch ausgebildet ist. Die Lageröffnung findet sich im Allgemeinen an einer Lagerwange. Dabei greift der jeweilige Lagerzapfen in die die Lageröffnung aufweisende Lagerwange ein.

Die Lagerwange findet sich kopfseitig an einem Rahmenschenkel der Basis. Sofern die Basis U-förmig ausgebildet ist, ist die Lagerwange endseitig des jeweiligen U-Schenkels an den U-Schenkel bzw. allgemein den Rahmenschenkel der Basis angeschlossen.

Die Strebe verfügt neben den beiden Lagerzapfen über einen Strebenschenkel. An diesen Strebenschenkel sind die beiden Lagerzapfen jeweils endseitig angeschlossen. Außerdem ist die Auslegung meistens so getroffen, dass der Strebenschenkel von seinen Dimensionen her an den Rahmenschenkel der Basis bzw. die beiden U-Schenkel und auch die U-Basis angepasst ist. Tatsächlich handelt es sich bei der U-förmigen Basis meistens um eine solche, die aus einem Vierkantrohr hergestellt wird. Um die vergleichbare Dimension des Strebenschenkels gegenüber dem Rahmenschenkel der Basis bzw. allgemein der U-förmigen Basis zu realisieren, wird der Strebenschenkel typischerweise aus vergleichbarem Vierkantrohr wie die U-förmige Basis hergestellt.

Die Lageröffnung ist im Allgemeinen schlüssellochartig ausgebildet. Dazu verfügt die Lageröffnung meistens über eine Schwenköffnung und eine Formschlussöffnung. Die Formschlussöffnung schließt dabei regelmäßig in Betätigungsrichtung der Strebe beim Übergang von der Lagerstellung in die Transportstellung an die Schwenköffnung an. Die Betätigungsrichtung der Strebe ist dabei größtenteils senkrecht bzw. vertikal zur demgegenüber horizontal orientierten Basis ausgerichtet.

Im Detail greift der jeweilige Lagerzapfen in der Lagerstellung schwenkbar in die Schwenköffnung ein. Wie zuvor bereits erläutert, verfügt der Lagerzapfen meistens über einen rechteckförmigen Querschnitt. Die Schwenköffnung ist dabei insgesamt so gestaltet und dimensioniert, dass der Lagerzapfen mit dem rechteckförmigen Querschnitt in der Schwenköffnung verschwenken kann, sodass in der Lagerstellung bei einem Nestvorgang die U-Basis eines weiteren eingeschobenen Rollbehälters die Strebe problemlos verschwenken kann.

Nimmt dagegen die Strebe ihre Transportstellung ein, so greift hierbei der jeweilige Lagerzapfen in der fraglichen Transportstellung größtenteils formschlüssig in die Formschlussöffnung ein. Hierbei wird die Strebe zugleich in der Betätigungsrichtung von der Lagerstellung in die Transportstellung überführt. Das geschieht derart, dass die Strebe praktisch vertikal angehoben wird und hierbei die Lagerzapfen mit ihrem rechteckförmigen Querschnitt von der Schwenköffnung in die Formschlussöffnung übergehen. In der Formschlussöffnung werden die Lagerzapfen mit dem rechteckförmigen Querschnitt formschlüssig aufgenommen, sodass die Strebe in der solchermaßen erreichten Transportstellung gegenüber dem Rahmen arretiert ist.

Der beschriebene Übergang von der Lagerstellung in die Transportstellung kann beispielhaft dadurch erfolgen und vorgenommen werden, dass ein Flurförderfahrzeug mit seinen Gabelzinken unter die fragliche Strebe bzw. Querstrebe fährt und beim Anheben der Gabelzinken die Querstrebe automatisch von der Lagerstellung in die Transportstellung überführt wird. In der Transportstellung ist die Strebe gegenüber der Basis arretiert, sodass im Anschluss hieran der Rollbehälter problemlos und einfach mit Hilfe des Flurförderfahrzeuges bewegt werden kann. Das alles gelingt ohne einen zusätzlich erforderlichen manipulativen Eingriff von Bedienpersonal praktisch automatisch beim (senkrechten) Verfahren der Gabelzinken zum Anheben des Rollbehälters. Dadurch wird eine besonders einfach zu handhabende gleichsam Rangier- oder Transporthilfe für den Rollbehälter zur Verfügung gestellt.

Zugleich ändert sich an dessen grundsätzlicher Funktion zur Nestbarkeit nichts. Hierin sind die wesentlichen Vorteile zu sehen.

Im Folgenden wird die Erfindung anhand einer lediglich ein Ausführungsbeispiel darstellenden Zeichnung näher erläutert; es zeigen
- Fig. 1: den erfindungsgemäßen Rollbehälter in einer perspektivischen Übersicht,
- Fig. 2: den Rollbehälter nach der Fig. 1 im Bereich der erfindungsgemäßen Strebe perspektivisch,
- Fig. 3: die Strebe mit dem jeweils endseitigen Lagerzapfen und zugehöriger Lageröffnung im Detail in Transportstellung und Lagerstellung,
- Fig. 4: einen alternativen Rollbehälter nach der Fig. 1 zu Beginn eines Nestvorganges und
- Fig. 5: mehrere Rollbehälter nach der Fig. 4 in nestender Anordnung.

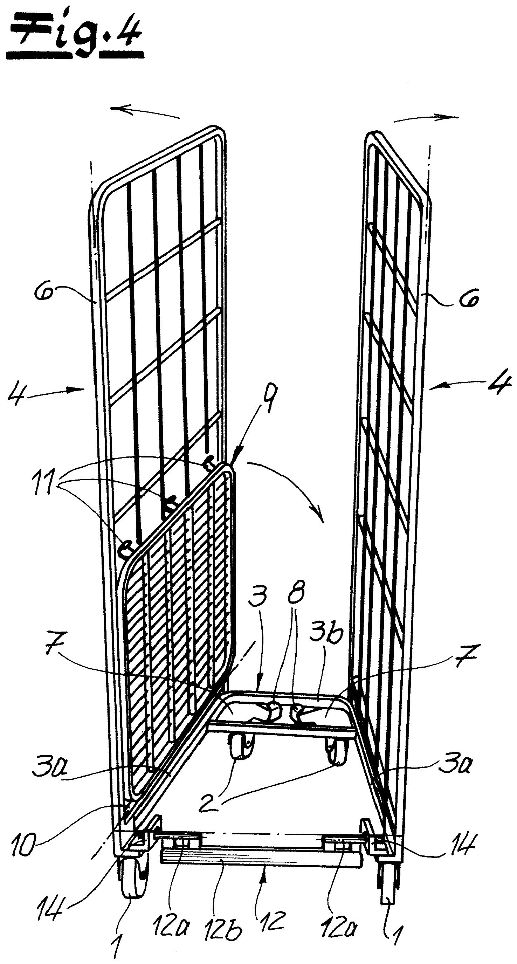

In den Figuren ist ein Rollbehälter und insbesondere Rollcontainer dargestellt, welcher zunächst einmal über eine auf drehbaren Rollen 1, 2 gelagerte Basis 3 verfügt, die nach dem Ausführungsbeispiel U-förmig ausgebildet ist. Bei den Rollen 1 handelt es sich um feststehende Bockrollen, wohingegen die Rollen 2 als Lenkrollen ausgebildet sind. Grundsätzlich können auch sämtliche Rollen 1, 2 als Lenkrollen ausgelegt sein. Zu diesem Zweck weist die U-förmige Basis 3 ausweislich der Darstellung in der Fig. 4 zwei U-Schenkel 3a sowie eine die beiden U-Schenkel 3a verbindende U-Basis 3b auf, welche insgesamt die unterseitigen Rollen 1, 2 aufweisen, auf denen die fragliche Basis 3 gelagert ist.

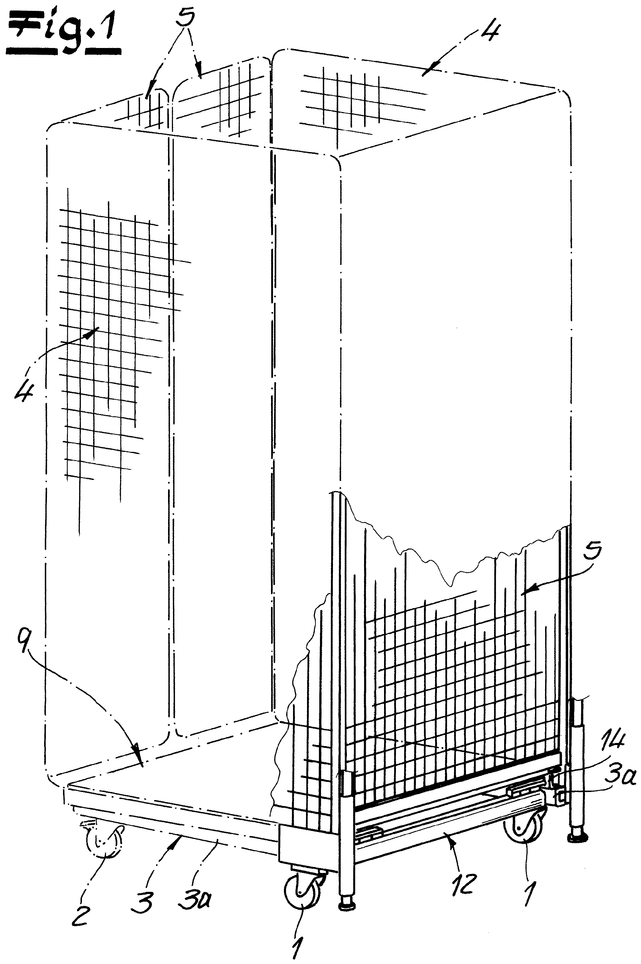

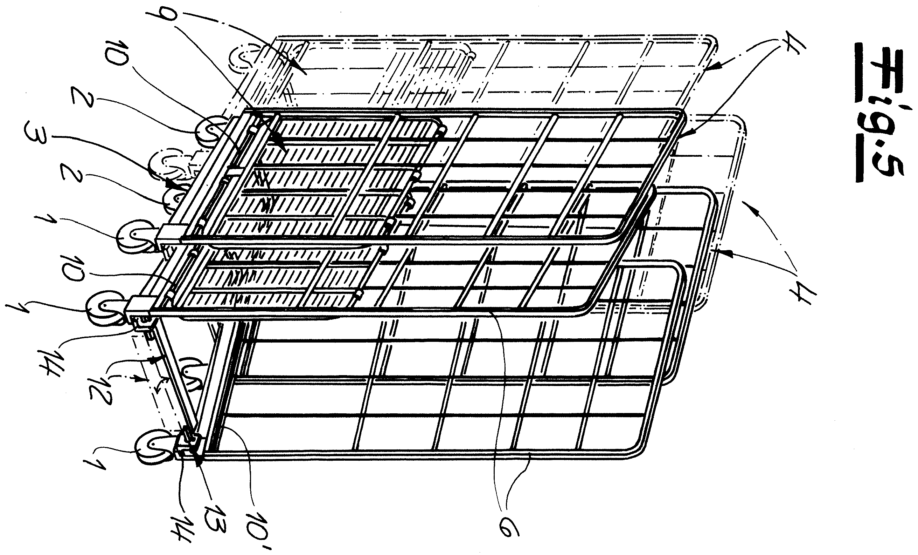

Man erkennt anhand der Fig. 4, dass die beiden U-Schenkel 3a schräg an die U-Basis 3b angeschlossen sind, und zwar in der Art eines sogenannten "A-Frame", um in Nestlage befindliche Rollcontainer entsprechend der Darstellung in der Fig. 5 ineinanderschieben zu können. Details hierzu werden in der DE 20 2018 104 227 U1 oder auch der einleitend bereits in Bezug genommenen DE 20 2014 105 450 U1 beschrieben. Ergänzend sei auf die ebenfalls in der Beschreibungseinleitung gewürdigte EP 2 597 011 A1 hingewiesen. Die Basis 3 ist überwiegend horizontal orientiert. Demgegenüber arbeitet die Variante nach den Figuren 1 bis 3 mit senkrecht an die U-Basis 3b angeschlossenen U-Schenkeln 3a. Der betreffende Rollbehälter ist demzufolge im Allgemeinen nicht nestbar ausgelegt.

Zum grundsätzlichen Aufbau des Rollbehälters gehört noch ein auf der Basis 3 angeordnetes sowie größtenteils senkrecht verlaufendes Gitterwandgestell 4, 5, welches sich nach dem Ausführungsbeispiel aus Seitenwänden 4 und einer Frontwand 5 und Rückwand 5 zusammensetzt. Die Figuren 4 und 5 zeigen die alternative Ausführungsform des Rollbehälters, welcher lediglich mit den Seitenwänden 4 ausgerüstet ist.

Die beiden Seitenwände 4 lassen sich jeweils um eine im Wesentlichen vertikale Achse 6 schwenken, können aber auch fest an die Basis 3 angeschlossen sein. Das wird bei einem Vergleich der Figuren 1 und 4 deutlich. Um den in der Nestlage nach der Fig. 4 befindlichen Rollbehälter in seine Gebrauchslage entsprechend der Fig. 1 zu überführen, werden die beiden Seitenwände 4 um ihre zugehörige vertikale Achse 6 mit ihren Enden nach außen geschwenkt, wie dies entsprechende Pfeile in der Fig. 4 andeuten. Zu diesem Zweck sind jeweilige die Rollen 2 tragende Ausleger 7 mit in der Fig. 4 zu erkennenden, hochstehenden Bügelanschlägen 8 vorgesehen, welche die Schwenkbewegung der betreffenden Seitenwand 4 begrenzen und für ihre lösbare Festlegung an der U-förmigen Basis 3 in der Gebrauchslage nach der Fig. 1 sorgen. Jetzt kann eine Bodenplatte 9 heruntergeschwenkt werden, die ihrerseits um eine größtenteils horizontale Schwenkachse 10 klappbar ausgebildet ist.

Alternativ hierzu lassen sich die Seitenwände 4 aber auch schlicht und ergreifend fest an die Basis 3 anschließen, wie dies in der Fig. 1 zusammen mit der Frontwand 5 und Rückwand 5 dargestellt ist. In beiden Fällen kann die Bodenplatte 9 um die größtenteils horizontale Schwenkachse 10 klappbar ausgebildet sein. Nach dem Ausführungsbeispiel wird die horizontale Schwenkachse 10 für die Bodenplatte 9 durch eine untere Querstrebe 10 an der linken Seitenwand 4 definiert. Die Bodenplatte 9 wird dabei ausweislich der Darstellung in der Fig. 4 durch Federkraft mit Hilfe einer nicht explizit dargestellten Feder beaufschlagt. Die Feder sorgt dafür, dass die Bodenplatte 9 ihre größtenteils aufrechte und in der Fig. 4 dargestellte Nestlage ohne Beaufschlagung einnimmt.

Um die Bodenplatte 9 in die in der Fig. 1 dargestellte Gebrauchslage gegen Federkraft zu überführen, muss die Bodenplatte 9 um ihre Schwenkachse 10 ausgehend von der Nestlage in der Fig. 4 im Uhrzeigersinn verschwenkt werden. Das geschieht derart, bis Auflagerbügel 11 an der Bodenplatte 9 an der der Schwenkachse 10 gegenüberliegenden Seite auf einer korrespondierenden Querstrebe 10' der rechten Seitenwand 4 zu liegen kommen, was im Detail nicht dargestellt ist. Damit diese Gebrauchslage des Rollbehälters und der Bodenplatte 9 beibehalten wird, ist es erforderlich, auf der Bodenplatte 9 Gegenstände abzulegen. Jetzt kann der Rollbehälter beispielsweise von einer Person hin- und hergeschoben werden. Alternativ zur beschriebenen Schwenkbarkeit der Bodenplatte 9 ist es aber auch möglich, ganz simpel mit einer fest an die Basis 3 angeschlossenen Bodenplatte 9 zu arbeiten, wie dies die Fig. 1 bzw. die Figuren 1 bis 3 darstellen und wiedergeben.

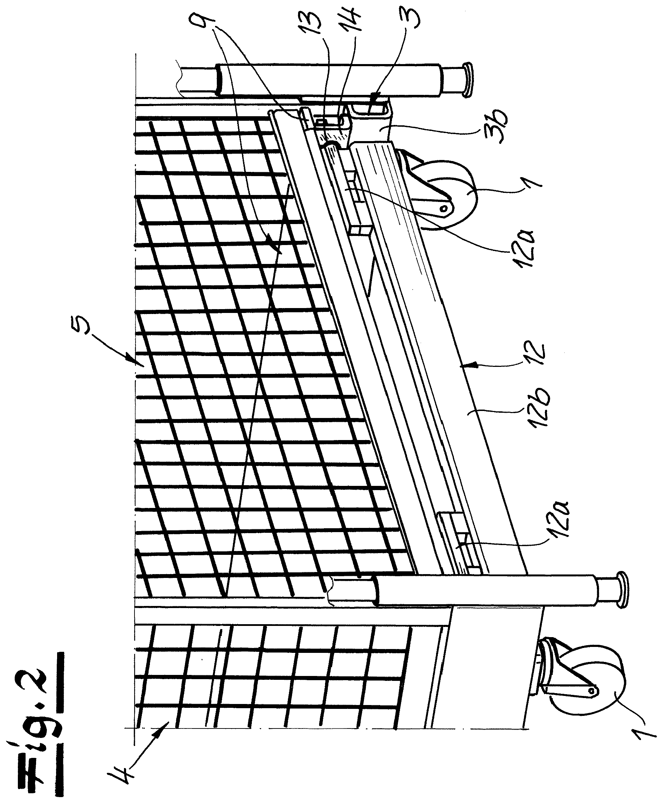

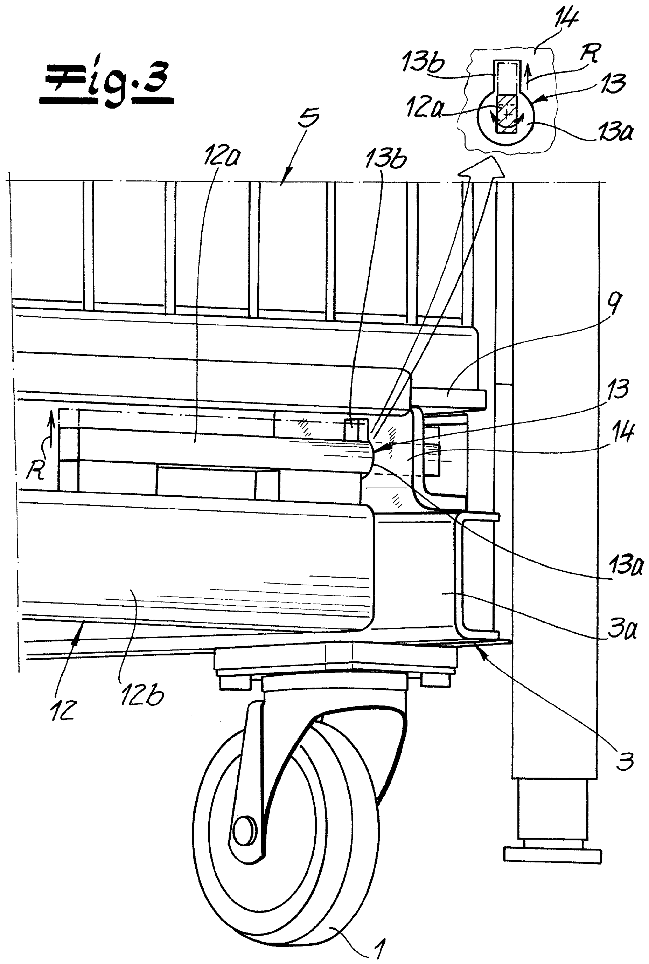

Von besonderer Bedeutung für die Erfindung ist nun eine im Detail in den Figuren 2 und 3 dargestellte Strebe 12, die nach dem Ausführungsbeispiel und nicht einschränkend als Querstrebe 12 ausgebildet ist. Die Strebe bzw. Querstrebe 12 ist unterseitig der Basis 3 bzw. unterhalb der Bodenplatte 9 vorgesehen und angeordnet. Tatsächlich ist die Strebe 12 unterseitig der Basis 3 drehbar an der Basis 3 gelagert, wofür jeweils gegenüberliegende beidseitige Lageröffnungen 13 sorgen, die man besonders in der vergrößerten Ansicht der Fig. 3 erkennt. Die beiden sich gegenüberliegenden Lageröffnungen 13 sind nach dem Ausführungsbeispiel in Lagerwangen 14 vorgesehen, die jeweils endseitig an die U-Schenkel 3a der U-Basis 3b angeschlossen sind. Anhand der Detaildarstellung in der Fig. 3 erkennt man, dass die jeweilige Lageröffnung 13 im Querschnitt schlüssellochartig ausgebildet ist. Tatsächlich setzt sich die Lageröffnung 13 aus einerseits einer Schwenköffnung 13a und andererseits einer Formschlussöffnung 13b zusammen.

Auch die Strebe bzw. Querstrebe 12 ist zweiteilig ausgelegt. Tatsächlich verfügt die Strebe bzw. Querstrebe 12 über jeweils einen kopfseitigen Lagerzapfen 12a, welcher in die beiden sich gegenüberliegenden Lageröffnungen 13 eingreift, wie dies nachfolgend noch näher erläutert wird. Zusätzlich zu diesen beiden kopfseitigen Lagerzapfen 12a ist noch als weiterer Bestandteil der Strebe 12 ein Strebenschenkel 12b realisiert, welcher mit den beiden jeweils endseitig vorgesehenen Lagerzapfen 12a ausgerüstet ist.

Man erkennt, dass die Querstrebe 12 im Bereich einer Querrandseite der Basis 3 angeordnet ist. Tatsächlich findet sich die Querstrebe 12 nach dem Ausführungsbeispiel gegenüberliegend der U-Basis 3b zur Verbindung beider U-Schenkel 3a. Außerdem ist die Strebe bzw. Querstrebe 12 unterhalb der auf der Basis 3 angeordneten Bodenplatte 9 platziert. Die jeweils kopfseitig der Strebe 12 vorgesehenen Lagerzapfen 12a sind im Querschnitt rechteckförmig und insbesondere quadratisch ausgebildet. Außerdem greifen die Lagerzapfen 12a in die sich gegenüberliegenden Lageröffnungen 13 ein.

Wie bereits erläutert, finden sich die beiden sich gegenüberliegenden Lageröffnungen 13 jeweils in zwei sich ebenfalls gegenüberliegenden Lagerwangen 14, die kopfseitig an einen Rahmenschenkel der Basis 3 angeschlossen sind, konkret die beiden sich gegenüberliegenden U-Schenkel 3a. Bei den beiden U-Schenkeln 3a handelt es sich ebenso wie bei der U-Basis 3b um ein Vierkantprofil bzw. Vierkantrohr. Der Strebenschenkel 12b ist dabei von seinen Dimensionen her an das fragliche Vierkantrohr bzw. die Rahmenschenkel der Basis 3 angepasst.

Die Strebe bzw. Querstrebe 12 lässt sich ausweislich der Darstellung in der Fig. 3 von einer arretierten Transportstellung in eine frei schwenkbare Lagerstellung und umgekehrt überführen. In der Fig. 3 ist die frei schwenkbare Lagerstellung der Strebe 12 durchgezogen dargestellt, wohingegen die arretierte Transportstellung der Strebe 12 zur strichpunktierten Darstellung korrespondiert.

Um die Strebe bzw. Querstrebe 12 von ihrer durchgezogen dargestellten Lagerstellung in der Fig. 3 in die strichpunktierte gezeichnete arretierte Transportstellung zu überführen, ist es erforderlich, die Strebe bzw. Querstrebe 12 in Betätigungsrichtung R zu beaufschlagen. Die Betätigungsrichtung R korrespondiert ausweislich der Darstellung in der Fig. 3 zu einer Vertikalbewegung der Strebe 12. Bei dieser Vertikalbewegung gehen die beidseitigen Lagerzapfen 12a der Strebe 12 von der Schwenköffnung 13a in die Formschlussöffnung 13b über, welche sich in der Betätigungsrichtung R an die Schwenköffnung 13a anschließt. Anhand der Fig. 3 erkennt man, dass sich die Lagerzapfen 12a trotz ihres rechteckigen bzw. quadratischen Querschnittes innerhalb der Schwenköffnung 13a hin- und herschwenken lassen. Tatsächlich nimmt die Strebe 12 diese Lagerstellung durchweg ein, und zwar schwerkraftunterstützt. In dieser Lagerstellung kann die Strebe bzw. Querstrebe 12 innerhalb der Schwenköffnung 13a verschwenkt werden, sodass beispielsweise eine U-Basis 3b eines weiteren Rollcontainers beim nestenden Zusammenfahren mehrerer der erfindungsgemäßen Rollbehälter entsprechend der Darstellung in der Fig. 5 die fragliche Strebe bzw. Querstrebe 12 verschwenkt und für den nestenden Eingriff unterfahren werden kann.

Soll dagegen der fragliche Rollbehälter transportiert werden, so führt eine entsprechende Beaufschlagung mit beispielsweise Gabelzinken eines Flurförderfahrzeuges dazu, dass die Strebe bzw. Querstrebe 12 in der Betätigungsrichtung R von der in der Fig. 3 durchgezogen dargestellten Lagerstellung in die strichpunktiert wiedergegebene Transportstellung überführt wird. Hierbei tauchen die beiden Lagerzapfen 12a mit ihrem rechteckigen Querschnitt in die Formschlussöffnung 13b der Lageröffnung 13 ein. Da der jeweilige Lagerzapfen 12a in der zugehörigen Formschlussöffnung 13b überwiegend formschlüssig gehalten wird, ist als Folge hiervon die Strebe 12 in der fraglichen Lageröffnung 13 in der nunmehr erreichten Transportstellung festgelegt bzw. arretiert. Die folglich den erfindungsgemäßen Rollbehälter unterfahrenden Gabelzinken sorgen nun dafür, dass der Rollbehälter trotz der nach wie vor nestenden Auslegung problemlos mit Hilfe des Flurförderfahrzeuges oder allgemein eines Förderelementes hin- und herbewegt werden kann.

## Patentansprüche

1. Rollbehälter, insbesondere Rollcontainer, mit einer auf drehbaren Rollen (1, 2) gelagerten Basis (3), und mit einem auf der Basis (3) angeordneten Gitterwandgestell (4, 5) aus zumindest zwei sich gegenüberliegenden Seitenwänden (4), **dadurch gekennzeichnet, dass** die Basis (3) unterseitig wenigstens eine hieran drehbar gelagerte Strebe (12) aufweist, welche gegenüber beidseitigen Lageröffnungen (13) sowohl in eine arretierte Transportstellung als auch in eine frei schwenkbare Lagerstellung überführbar ist.

2. Rollbehälter nach Anspruch 1, **dadurch gekennzeichnet, dass** die Strebe (12) als quer zur Längserstreckung orientierte Querstrebe (12) ausgebildet ist.

3. Rollbehälter nach Anspruch 2, **dadurch gekennzeichnet, dass** die Querstrebe (12) im Bereich einer Querrandseite der Basis (3) angeordnet ist.

4. Rollbehälter nach einem der Ansprüche 1 bis 3, **dadurch gekennzeichnet, dass** die Strebe (12) unterhalb einer auf der Basis (3) angeordneten Bodenplatte (9) platziert ist.

5. Rollbehälter nach einem der Ansprüche 1 bis 4, **dadurch gekennzeichnet, dass** die Strebe (12) jeweils kopfseitige Lagerzapfen (12a) aufweist, die in die sich gegenüberliegende Lageröffnungen (13) eingreifen.

6. Rollbehälter nach Anspruch 5, **dadurch gekennzeichnet, dass** der jeweilige Lagerzapfen (12a) im Querschnitt rechteckförmig, insbesondere quadratisch, ausgebildet ist.

7. Rollbehälter nach einem der Ansprüche 5 oder 6, **dadurch gekennzeichnet, dass** der jeweilige Lagerzapfen (12a) in eine die Lageröffnung (13) aufweisende Lagerwange (14) eingreift.

8. Rollbehälter nach Anspruch 7, **dadurch gekennzeichnet, dass** die Lagerwange (14) kopfseitig an einen Rahmenschenkel der Basis (3) angeschlossen ist.

9. Rollbehälter nach einem der Ansprüche 1 bis 8, **dadurch gekennzeichnet, dass** die Strebe (12) mit einem die beiden Lagerzapfen (12a) jeweils endseitig aufweisenden Strebenschenkel (12b) ausgerüstet ist.

10. Rollbehälter nach Anspruch 9, **dadurch gekennzeichnet, dass** der Strebenschenkel (12b) von seinen Dimensionen her an den Rahmenschenkel der Basis (3) angepasst ist.

11. Rollbehälter nach einem der Ansprüche 1 bis 10, **dadurch gekennzeichnet, dass** die Lageröffnung (13) schlüssellochartig ausgebildet ist.

12. Rollbehälter nach einem der Ansprüche 1 bis 11, **dadurch gekennzeichnet, dass** die Lageröffnung (13) mit einer Schwenköffnung (13a) und einer Formschlussöffnung (13b) ausgerüstet ist.

13. Rollbehälter nach Anspruch 12, **dadurch gekennzeichnet, dass** die Formschlussöffnung (13b) in Betätigungsrichtung (R) der Strebe (12) beim Übergang von der Lagerstellung in die Transportstellung an die Schwenköffnung (13a) anschließt.

14. Rollbehälter nach einem der Ansprüche 1 bis 13, **dadurch gekennzeichnet, dass** der jeweilige Lagerzapfen (12a) in der Lagerstellung schwenkbar in die Schwenköffnung (13a) eingreift.

15. Rollbehälter nach einem der Ansprüche 1 bis 14, **dadurch gekennzeichnet, dass** der jeweilige Lagerzapfen (12a) in der Transportstellung größtenteils formschlüssig in die Formschlussöffnung (13b) eingreift.

## Geänderte Patentansprüche

### Geänderte Patentansprüche gemäss Regel 137(2) EPÜ.

1. Rollbehälter, insbesondere Rollcontainer, mit einer auf drehbaren Rollen (1, 2) gelagerten Basis (3), und mit einem auf der Basis (3) angeordneten Gitterwandgestell (4, 5) aus zumindest zwei sich gegenüberliegenden Seitenwänden (4), wobei die Basis (3) unterseitig wenigstens eine hieran drehbar gelagerte Strebe (12) aufweist, welche gegenüber beidseitigen Lageröffnungen (13) sowohl in eine arretierte Transportstellung als auch in eine frei schwenkbare Lagerstellung überführbar ist,
**dadurch gekennzeichnet, dass**
die Lageröffnung (13) mit einer Schwenköffnung (13a) und einer Formschlussöffnung (13b) ausgerüstet ist, wobei
die Formschlussöffnung (1b) in Betätigungsrichtung (R) der Strebe (12) beim Übergang von der Lagerstellung in die Transportstellung an die Schwenköffnung (13a) anschließt, und wobei
Der jeweilige Lagerzapfen (12a) in der Lagerstellung schwenkbar in die Schwenköffnung (13a) und in der Transportstellung größtenteils formschlüssig in die Formschlussöffnung (13b) eingreift.

2. Rollbehälter nach Anspruch 1, **dadurch gekennzeichnet, dass** die Strebe (12) als quer zur Längserstreckung orientierte Querstrebe (12) ausgebildet ist.

3. Rollbehälter nach Anspruch 2, **dadurch gekennzeichnet, dass** die Querstrebe (12) im Bereich einer Querrandseite der Basis (3) angeordnet ist.

4. Rollbehälter nach einem der Ansprüche 1 bis 3, **dadurch gekennzeichnet, dass** die Strebe (12) unterhalb einer auf der Basis (3) angeordneten Bodenplatte (9) platziert ist.

5. Rollbehälter nach einem der Ansprüche 1 bis 4, **dadurch gekennzeichnet, dass** die Strebe (12) jeweils kopfseitige Lagerzapfen (12a) aufweist, die in die sich gegenüberliegende Lageröffnungen (13) eingreifen.

6. Rollbehälter nach Anspruch 5, **dadurch gekennzeichnet, dass** der jeweilige Lagerzapfen (12a) im Querschnitt rechteckförmig, insbesondere quadratisch, ausgebildet ist.

7. Rollbehälter nach einem der Ansprüche 5 oder 6, **dadurch gekennzeichnet, dass** der jeweilige Lagerzapfen (12a) in eine die Lageröffnung (13) aufweisende Lagerwange (14) eingreift.

8. Rollbehälter nach Anspruch 7, **dadurch gekennzeichnet, dass** die Lagerwange (14) kopfseitig an einen Rahmenschenkel der Basis (3) angeschlossen ist.

9. Rollbehälter nach einem der Ansprüche 5 bis 8, **dadurch gekennzeichnet, dass** die Strebe (12) mit einem die beiden Lagerzapfen (12a) jeweils endseitig aufweisenden Strebenschenkel (12b) ausgerüstet ist.

10. Rollbehälter nach Anspruch 9, **dadurch gekennzeichnet, dass** der Strebenschenkel (12b) von seinen Dimensionen her an den Rahmenschenkel der Basis (3) angepasst ist.

11. Rollbehälter nach einem der Ansprüche 1 bis 10, **dadurch gekennzeichnet, dass** die Lageröffnung (13) schlüssellochartig ausgebildet ist.
